# EUROPEAN PATENT APPLICATION

(11) **EP 0 781 810 A2**
(43) Date of publication of application: **02.07.1997**
(21) Application number: 96309460.2
(22) Date of filing: 23.12.1996
(51) Int. Cl.: C08L 67/00, C08L 77/12, C08K 5/00

(54) **Liquid crystal polyester resin composition**

(30) Priority: 28.12.1995 JP 343447/95
(71) Applicant: POLYPLASTICS CO. LTD., Chuo-Ku Osaka-shi Osaka 541 (JP)
(72) Inventor: Miyashita, Takayuki, Kawasaki-shi, Kanagawa (JP)
(74) Representative: Jackson, Peter

(57) **Abstract**

The present invention provides a liquid crystal resin molding capable of inhibiting infrared transmission and having a good light reflection efficiency and excellent heat resistance and moldability. The liquid crystal polyester resin composition comprises a melt-processable polyester resin capable of forming an anisotropic molten phase, 0.01 to 5 % by weight (based on the whole weight of the composition) of an infrared absorber and 0 to 70 % by weight (based on the whole weight of the composition) of a filler.

## Description

### Field of the Invention

The present invention relates to a liquid crystal polyester resin composition, more specifically to a liquid crystal polyester resin composition for obtaining a liquid crystal resin-molded article being capable of inhibiting infrared transmission and having a good light reflection efficiency and an excellent heat resistance and moldability.

### Description of the Related Art

Electronic parts having a light-emitting part and a light-receiving part are usually provided with a bulkhead between the light-emitting part and the light-receiving part. However, as electronic parts are reduced in size in recent years, the bulkhead therefor is getting thinner. Accordingly, there is the problem that light which is emitted from a light emitting-part, particularly infrared ray is transmitted through a bulkhead to reach a light-receiving part and functions as an electronic part are not revealed. As one means for solving this problem, it has been tried to employ black materials containing carbon for molding materials for electronic parts in order to prevent transmission of infrared ray.

When such black materials are used, infrared ray is not transmitted to a light-receiving part, and functions as an electronic part are revealed, but there has been brought about the new problem that a light reflection efficiency in a light-emitting part is inferior, and therefore a light-emitting element having a higher brightness has to be used.

### Summary of the Invention

Intensive investigations made by the present inventors regarding a material solving these problems, preventing transmission of infrared rays and having a good light reflection efficiency have resulted in finding that the addition of an infrared absorber to a liquid crystal polyester resin prevents transmission of infrared rays even if a bulkhead between a light emitting part and a light-receiving part is thinned and improves a light reflection efficiency, and thus completing the present invention.

That is, the present invention relates to a liquid crystal polyester resin composition characterized by comprising a melt-processable polyester resin capable of forming an anisotropic molten phase, 0.01 to 5 % by weight (based on the whole weight of the composition) of an infrared absorber and 0 to 70 % by weight (based on the whole weight of the composition) of a filler, and a composition for an electronic part having a light-emitting part and a light-receiving part or a photodectector.

### Brief Description of the Drawings

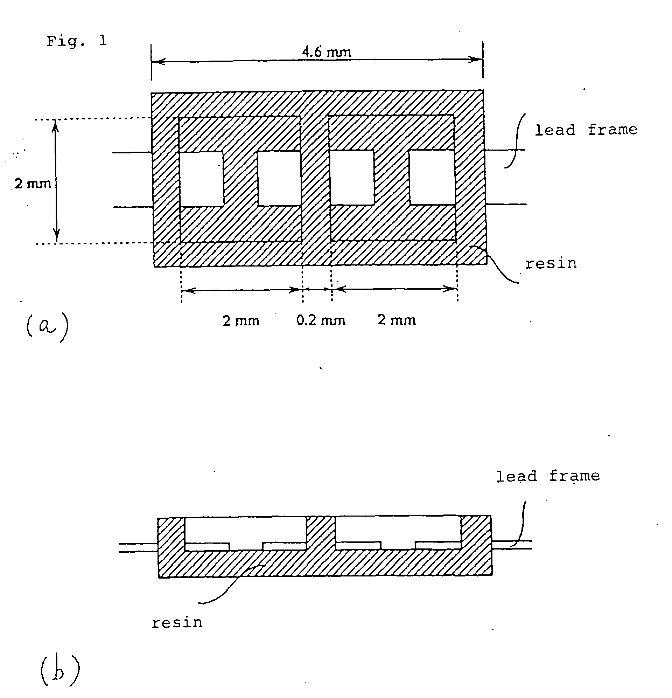

Fig. 1 is a drawing showing a molding for evaluation used for an infrared transmission test in the examples, wherein (a) is a plan, and (b) is a schematic cross section.

### Detailed Description of the Invention

The present invention shall be explained below in detail.

The liquid crystal polyester resin used in the present invention has molecular orientation in a molten state and shows optical anisotropy. In this case, molecules are arranged in longitudinal and parallel directions of the molecules on the whole in the molecular orientation, and an axis thereof may not necessarily conform to a gradient of the molecules. Anisotropy in a molten state can be observed by conventional methods for inspecting a polarization making use of an orthogonal polarizer. More specifically, an anisotropic molten phase can be confirmed by observing a molten sample put on a Leitz hot stage under a nitrogen atmosphere by means of a Leitz polarization microscope at a magnification of 40 times. The polymer of the present invention transmits polarized light even if it is in a molten stationary state when it is inspected among orthogonal polarizers, and shows optical anisotropy. This can be observed by an optical pattern which is characteristic of a liquid crystal phase in some temperature range when the polymer is gradually heated. Also in X-ray diffraction, a diffraction pattern peculiar to the phase can be observed. In general, a differential scanning calorimeter is used in thermal analysis, and a change in entropy and transition temperatures in various phase transitions can be measured.

A liquid crystal polymer suited to use in the present invention tends to be insoluble in ordinary solvents and therefore is unsuitable for solution processing. However, these polymers can readily be processed by conventional melt processing.

Aromatic polyester and aromatic polyesteramide are preferred for the liquid crystal polymer, and polyester containing partially aromatic polyester and/or aromatic polyesteramide in the same molecular chain is a preferred example as well.

Particularly preferred are liquid crystal aromatic polyester and liquid crystal aromatic polyesteramide each containing as a structural component at least one compound selected from the group consisting of aromatic hydroxycarboxylic acid, aromatic dicarboxylic acid, aromatic diol, aromatic hydroxyamine and aromatic diamine.

More specifically, the liquid crystal polymer used in the present invention includes:
1) polyester comprising primarily at least one of aromatic hydrocarboxylic acid and derivatives thereof,
2) polyester comprising primarily:
   a) at least one of aromatic hydrocarboxylic acid and derivatives thereof,
   b) at least one of aromatic dicarboxylic acid, alicyclic dicarboxylic acid and derivatives thereof, and
   c) at least one of aromatic diol, alicyclic diol and derivatives thereof,
3) polyesteramide comprising primarily:
   a) at least one of aromatic hydrocarboxylic acid and derivatives thereof,
   b) at least one of aromatic hydroxyamine, aromatic diamine and derivatives thereof, and
   c) at least one of aromatic dicarboxylic acid, alicyclic dicarboxylic acid and derivatives thereof, and
4) polyesteramide comprising primarily:
   a) at least one of aromatic hydrocarboxylic acid and derivatives thereof,
   b) at least one of aromatic hydroxyamine, aromatic diamine and derivatives thereof,
   c) at least one of aromatic dicarboxylic acid, alicyclic dicarboxylic acid and derivatives thereof, and
   d) at least one of aromatic diol, alicyclic diol and derivatives thereof.

Further, a molecular weight-controlling agent may be used, if necessary, in combination with the structural components described above. Included are, for example, use of monofunctional monomers and excess addition of carboxylic acid or alcohol for the purpose to break molar balance between acid and alcohol, but it shall not be restricted to these examples.

Preferred examples of specific compounds constituting the liquid crystal polyester include naphthalene compounds such as 2,6-naphthalenedicarboxylic acid, 2,6-dihydroxynaphthalene, 1,4-dihydroxynaphthalene and 6-hydroxy-2-naphthoic acid, biphenyl compounds such as 4,4'-diphenyldicarboxylic acid and 4,4'-dihydroxybiphenyl, para position-substituted benzene compounds and nucleus-substituted benzene compounds thereof (substituents are selected form chlorine, bromine, methyl, phenyl and 1-phenylethyl) such as p-hydroxybenzoic acid, terephthalic acid, hydroquinone, p-aminophenol and p-phenylenediamine, and meta position-substituted benzene compounds such as isophthalic acid and resorcin.

Preferred examples of the specific compounds include naphthalene compounds such as 2,6-naphthalenedicarboxylic acid, 2,6-dihydroxynaphthalene, 1,4-dihydroxynaphthalene and 6-hydroxy-2-naphthoic acid, biphenyl compounds such as 4,4'-diphenyldicarboxylic acid and 4,4'-dihydroxybiphenyl, and a compound represented by the following formula (I), (II) or (III): 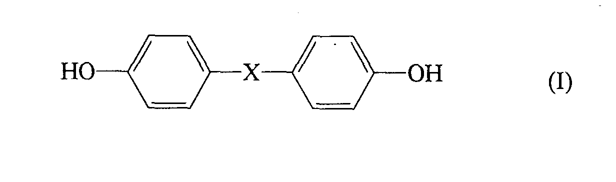 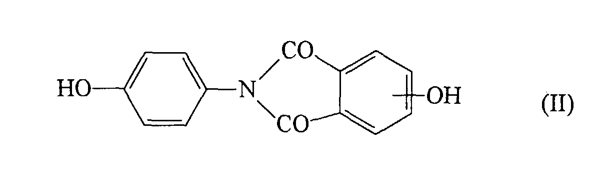 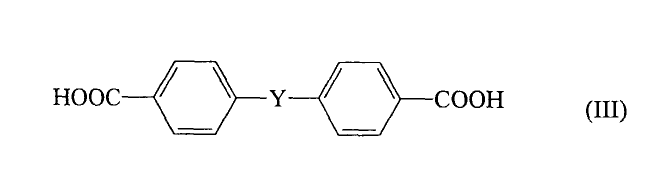 wherein X represents a group selected from alkylene (C₁ to C₄), alkylidene, -O-, -SO-, -SO₂-, -S- and - CO-, and Y represents a group selected from -(CH₂)ₙ-(n = 1 to 4) and -O(CH₂)ₙO- (n = 1 to 4).

Further, in addition to the structural components described above, the liquid crystal polyester may contain partially polyalkylene terephthalate having no anisotropic melt phase in the same molecular chain. In this case, the alkyl group has 2 to 4 carbon atoms.

More preferred example is the polyester containing as an essential structural component at least one compound selected from the naphthalene compounds, the biphenyl compounds and the para position-substituted benzene compounds out of the structural components described above. Among the para position-substituted benzene compounds, particularly preferred examples are p-hydroxybenzoic acid, methylhydroquinone and 1-phenylethylhydroquinone.

Specific examples of the compounds having an ester-forming functional group which are the structural components and specific examples of the polyesters forming an anisotropic molten phase which are preferably used in the present invention are described in JP-B-63-36633.

In general, the aromatic polyester and polyesteramide described above show an inherent viscosity (I. V.) of at least about 1.0 dℓ/g, for example, about 1.0 to 10.0 dℓ/g when they are dissolved in parafluorophenol in a concentration of 0.1 % by weight at 60°C.

In the present invention, a filler may be blended if necessary. Preferred as the filler is at least one powder filler selected from the group consisting of glass beads, glass balloon, glass powder, II group elements in the periodic table and oxides, sulfates, phosphates, silicates and carbonates thereof, and elements of aluminum, silicon, zinc, lead, antimony and bismuth and oxides thereof.

Oxides of the II group elements in the periodic table are compounds such as magnesium oxide, calcium oxide, barium oxide and zinc oxide. Phosphates thereof are compounds such as magnesium phosphate, calcium phosphate, barium phosphate, zinc phosphate, magnesium pyrophosphate and calcium pyrophosphate. Sulfates thereof are compounds such as magnesium sulfate, calcium sulfate and barium sulfate. Silicates thereof are compounds such as magnesium silicate, calcium silicate, aluminum silicate, kaolin, talc, clay, diatomaceous earth and wollastonite. Carbonates thereof are compounds such as calcium carbonate, magnesium carbonate, barium carbonate and zinc carbonate. Phosphates are particularly suitable. In addition to the above compounds, at least one compound selected from the group consisting of amphoteric metal elements such as zinc, aluminum, silicon, tin, lead, antimony and bismuth, and oxides of those elements is preferred as well. In particular, amphoteric metal elements such as zinc, aluminum, silicon, tin, lead, and oxides thereof are preferred.

The particle diameter of these powder inorganic fillers falls in a range of 0.01 to 100 µm, preferably 0.1 to 30 µm, and more preferably 0.5 to 10 µm. The particle diameter of less than 0.01 µm is liable to form coagulated lumps on a molding surface due to poor dispersion, and the diameter exceeding 100 µm deteriorates smoothness of the molding and can not provide good appearance.

Further, fibrous inorganic matters also are preferred as the inorganic filler and used alone or in combination with the powder inorganic fillers described above.

The fibrous inorganic matters include glass fiber, milled glass fiber, carbon fiber, asbestos fiber, silica fiber, silica·alumina fiber, alumina fiber, zirconia fiber, boron nitride fiber, silicon nitride fiber, boron fiber, potassium titanate fiber, and fibrous matters of metals such as stainless steel, aluminum, titanium, copper and brass. In particular, glass fiber and milled glass fiber are preferred.

The form of these fibrous inorganic matters falls preferably in the ranges of a diameter of 1 to 30 µm and a length of 5 µm to 1 mm, particularly preferably 10 to 100 µm.

The blend amount of the powder inorganic fillers described above is 0 to 70 % by weight, preferably 5 to 40 % by weight based on the whole amount of the liquid crystal polyester resin composition. The blended amount exceeding 70 % by weight reduces a fluidity of the resin and can not provide a molding having a good surface. In addition thereto, it lowers as well a mechanical strength of the molding and therefore is not preferred. The blend amount of the fibrous inorganic matters is 0 to 70 % by weight, preferably 5 to 40 % by weight based on the whole amount of the liquid crystal polyester resin composition.

Provided that it is not preferred in terms of moldability and various physical properties that the total blend amount of the powder inorganic filler and the fiberous inorganic matters described above exceeds 70 % by weight based on the whole amount of the liquid crystal polyester resin composition.

Next, the infrared absorber used in the present invention is a substance having a nature to absorb light in a specific infrared wavelength region and includes various organic dyes or organic coloring matters. More specifically, examples thereof include anthraquinone, polymethine, cyanine, aminium and diimonium compounds. Anthraquinone and cyanine compounds are particularly preferred. These infrared absorbers have both of a function to absorb infrared rays to convert them to heat energy and a function to absorb light in an infrared wavelength region.

The addition amount of these infrared absorbers of less than 0.01 % by weight (based on the whole amount of the composition) does not provide a sufficiently high infrared absorbing effect. On the contrary, the addition amount exceeding 5 % by weight (based on the whole amount of the composition) causes the problems of a reduction in the physical properties of the resin itself and the decomposition of the resin. Further, it brings about the problem that the color is darkened as compared with the original color of the resin according to the kind of the infrared absorber added, and therefore a sufficiently high reflection effect can not be obtained. Accordingly, such amount is not preferred. Thus, from such point of view, the addition amount of the infrared absorber is preferably 0.01 to 5 % by weight (based on the whole amount of the composition), more preferably 0.03 to 2 % by weight.

As described above, the infrared absorber absorbs selectively light in an infrared wavelength region. Accordingly, in order to broaden a wavelength region for absorbing (preventing transmission) infrared rays, the infrared absorbers described above may be used in the form of a mixture of two or more kinds thereof. Further, white pigments such as titanium oxide may be blended.

As described above, the liquid crystal polyester resin composition of the present invention provides a molding having an excellent absorptivity for infrared rays (a property for preventing infrared rays from transmitting) and a good light reflection efficiency and can widely be applied to electric and electronic parts having a light-emitting part and a light-receiving part. In addition thereto, it is useful for many other electric and electronic parts.

### Examples

The present invention shall be explained below in detail with reference to examples, but the present invention shall not be restricted thereto.

### Examples 1 to 4

Liquid crystal polymers A and B which shall be described later, an infrared absorber and a filler (% by weight based on the whole amount of the composition) shown in Table 1 were dispersed by kneading them at 320°C in the case of the polymer A and 340°C in the case of the polymer B by a melt-kneading method with an extruder (brand name: PCM30-25-2VJ, manufactured by Ikegai Tekko Co., Ltd.) at a screw revolution number of 150 rpm to prepare strands, and then they were pelletized. After drying the pellets at 140°C for 3 hours, they were injection-molded by means of a mold which was controlled to a temperature of 120°C to prepare a molding for evaluation which had dimensions of 4.6 × 2.4 × 2 (mm) and had two dents of 2 × 2 × 1 (mm) at an interval of 0.2 mm on a surface and into which a lead frame was inserted as shown in Fig. 1. Each one light emitting device and photodetector were put into the dent of 2 × 2 × 1 (mm) to operate the light-emitting device, and light coming from an aperture part of the dent was shut off. Then, an infrared transmission test on whether the photodetector detects infrared rays was carried out. The results thereof are shown in Table 1.

### Comparative Examples 1 to 3

The moldings for evaluation were prepared and evaluated in the same manners as those in the examples described above, except that the infrared absorbers were not added. The results thereof are shown in Table 1.

The liquid crystal polyesters used in the examples have the following structural units:

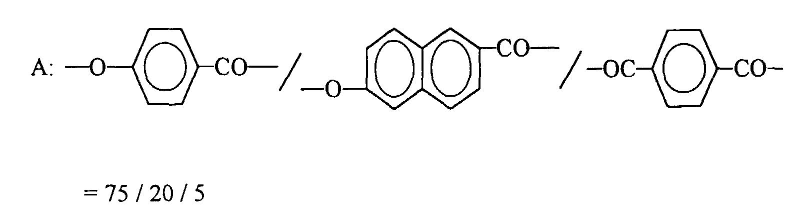

Flow-starting temperature: 297°C, and melting point: 325°C 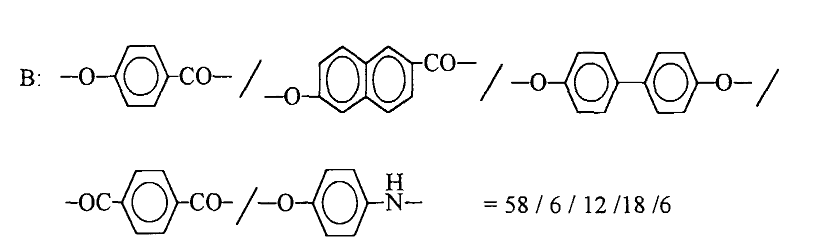 Flow-starting temperature: 327°C, and melting point: 360°C
(above numerals are based on mole ratios)

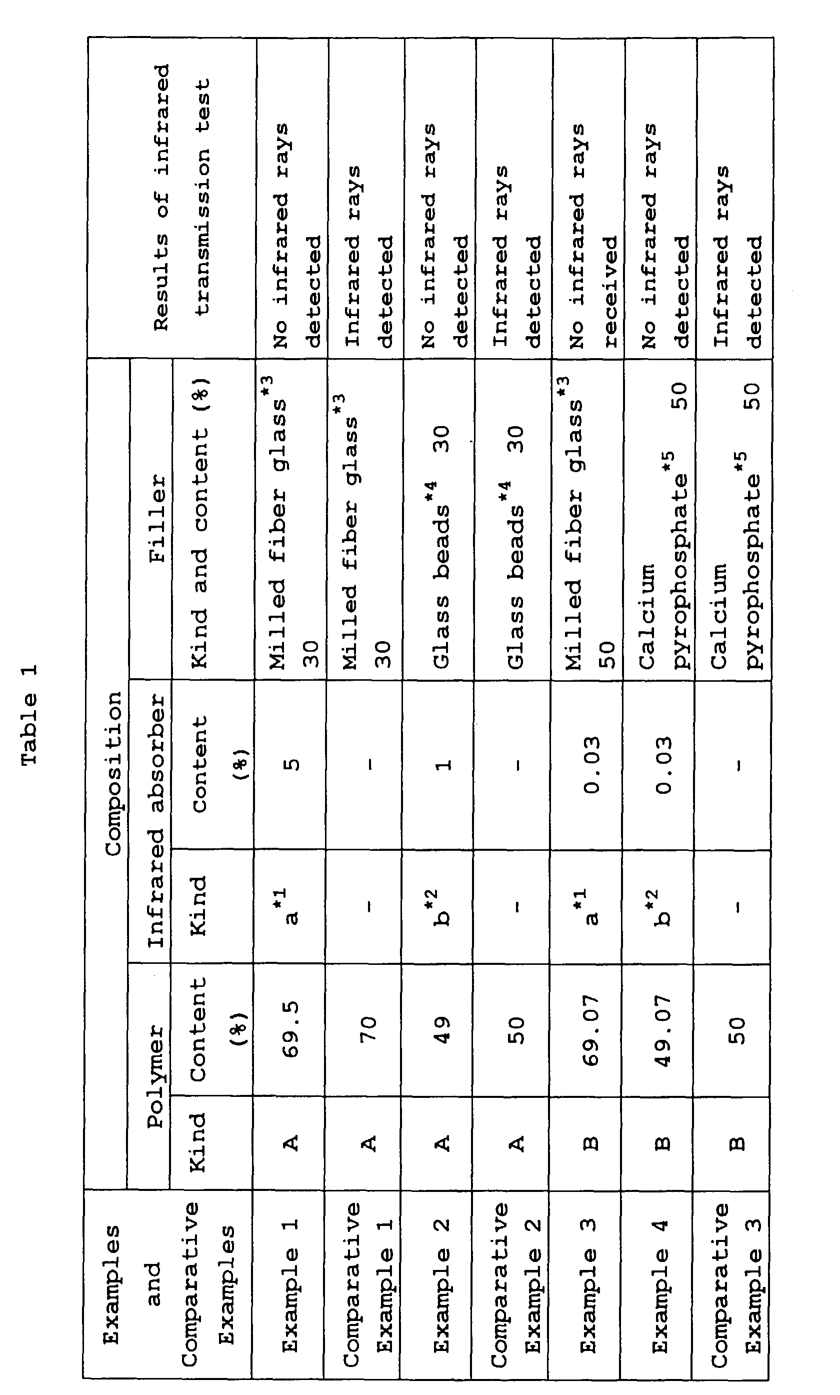

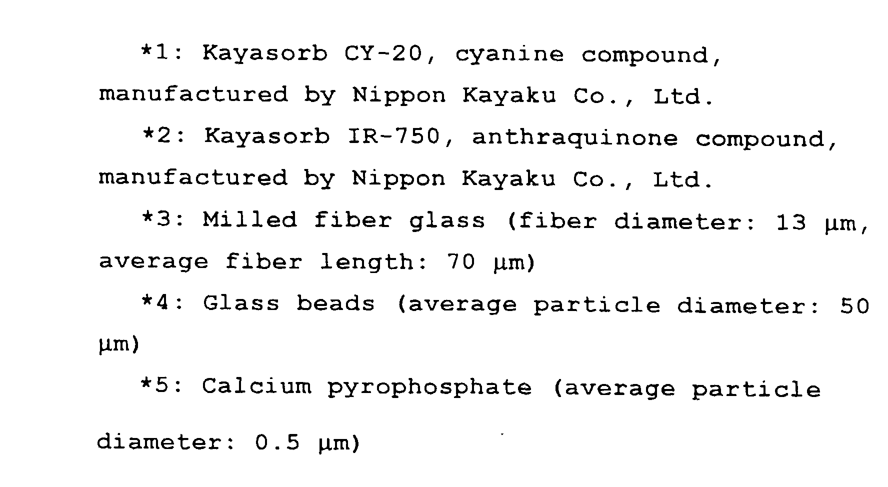

## Claims

1. A liquid crystal polyester resin composition comprising a melt-processable polyester resin capable of forming an anisotropic molten phase, 0.01 to 5 % by weight (based on the whole weight of the composition) of an infrared absorber and 0 to 70 % by weight (based on the whole weight of the composition) of a filler.

2. A liquid crystal polyester resin composition as described in claim 1, wherein the infrared absorber is an organic coloring matter.

3. A liquid crystal polyester resin composition as described in claim 2, wherein the organic coloring matter is at least one compound selected from anthraquinone, polymethine, cyanine, aminium and diimonium compounds.

4. A composition for an electronic part having a light-emitting part and a light-receiving part, comprising the liquid crystal polyester resin composition as described in any of claims 1 to 3.
